# EUROPÄISCHE PATENTSCHRIFT

(11) **EP 4 094 049 B1**
(45) Veröffentlichungstag und Bekanntmachung des Hinweises auf die Patenterteilung: **29.11.2023**
(21) Anmeldenummer: 20833884.8
(22) Anmeldetag: 21.12.2020
(51) Int. Cl.: G01D 11/30, B60Q 1/068, B60Q 1/00

(54) **EINSTELLVORRICHTUNG ZUM VERSCHWENKEN ZUMINDEST EINES RELEVANTEN BAUTEILS FÜR EINEN KRAFTFAHRZEUGSCHEINWERFER**
ADJUSTING DEVICE FOR PIVOTING AT LEAST ONE RELEVANT COMPONENT FOR A MOTOR VEHICLE HEADLAMP
DISPOSITIF DE RÉGLAGE PERMETTANT DE PIVOTER AU MOINS UN COMPOSANT PERTINENT POUR UN PHARE DE VÉHICULE AUTOMOBILE

(30) Priorität: 22.01.2020 EP 20153037
(43) Veröffentlichungstag der Anmeldung: 30.11.2022
(73) Patentinhaber: ZKW Group GmbH, 3250 Wieselburg (AT)
(72) Erfinder: STEINKELLNER, Johann, 3684 St. Oswald (AT); EDERER, Lukas, 3382 Loosdorf (AT)
(74) Vertreter: Patentanwaltskanzlei Matschnig & Forsthuber OG
(86) Internationale Anmeldenummer: PCT/EP2020/087444
(87) Internationale Veröffentlichungsnummer: WO 2021/148214

(56) Entgegenhaltungen:
- EP-A1- 3 511 204
- DE-A1- 2 313 836
- GB-A- 552 970
- JP-A- 2009 067 204

## Beschreibung

Die Erfindung betrifft eine Einstellvorrichtung zum Verschwenken zumindest eines relevanten Bauteiles für einen Kraftfahrzeugschweinwerfer um eine erste und eine zweite Achse, umfassend
- ein Halteelement zur verschiebbaren Halterung des zumindest einen relevanten Bauteils, welches Halteelement eine erste Gleitfläche eines Flächenpaares umfasst, welche als Teil einer Kugelfläche ausgebildet ist,
- einen Tragerahmen zur Aufnahme des Halteelements, wobei der Tragerahmen ein zweite Gleitfläche des Flächenpaares umfasst, welche als Teil einer Kugelfläche und korrespondierend zur ersten Gleitfläche ausgebildet ist, wobei das Halteelement mittels einer Lagereinrichtung derart in dem Tragerahmen gelagert ist, dass die erste Gleitfläche des Halteelements entlang der zweiten Gleitfläche des Tragerahmens um die erste und die zweite Achse verschiebbar ist,
- eine Justiereinrichtung zum Verschwenken des relevanten Bauteils um die erste und die zweite Achse, welche Justiereinrichtung ein Einstellbauteil und eine erste Verstelleinrichtung und eine zweite Verstelleinrichtung aufweist, welche erste und zweite Verstelleinrichtung an dem Einstellbauteil angeordnet sind, wobei das Einstellbauteil mit dem Halteelement mechanisch mittels eines Verbindungselements verbunden ist.

Die Erfindung betrifft weiters eine Beleuchtungsvorrichtung für einen Kraftfahrzeugscheinwerfer, umfassend zumindest eine erfindungsgemäße Einstellvorrichtung.

Die Erfindung betrifft ferner eine Sensorvorrichtung für einen Kraftfahrzeugscheinwerfer, umfassend zumindest eine erfindungsgemäße Einstellvorrichtung sowie ein als Sensor ausgebildetes relevantes Bauteil.

Die Erfindung betrifft weiters einen Kraftfahrzeugscheinwerfer mit zumindest einer erfindungsgemäßen Beleuchtungsvorrichtung und/oder zumindest einer erfindungsgemäßen Sensorvorrichtung.

Einstellsysteme sind aus dem Stand der Technik bekannt und werden bei Kraftfahrzeugscheinwerfern häufig eingesetzt, um die vertikale Auslenkung (beispielsweise Leuchtweitenregulierung) oder die horizontale Auslenkung (Grundeinstellung oder beispielsweise Kurvenlicht) einer Lichtverteilung einzustellen.

Einstellsysteme sollen einerseits eine zuverlässige Verstellung eines relevanten Bauteils ermöglichen, andererseits soll der Platzbedarf solcher Einstellsysteme minimiert werden, um die Konzeption eines Kraftfahrzeugscheinwerfers möglichst wenig einzuschränken.

Bisherige Einstellsysteme weisen zumeist ein Verstelldreieck mit einem Fixlagerpunkt und zwei Angriffspunkten auf, wobei durch die Verbindung aus Fixlagerpunkt und dem Angriffspunkt je eine Achse ausgebildet wird, und durch Verschieben der Angriffspunkte eine Verschwenkbewegung erzeugt wird. Solche Einstellsysteme weisen einen aufgrund der Ausbildung des Schwenkdreiecks gewissen Platzbedarf auf.

Die GB 552 970 A, die DE 23 13 836 A1 und die JP 2009 067204 A zeigen Einstellvorrichtungen aus dem Stand der Technik.

Es ist daher eine Aufgabe der Erfindung ein Einstellsystem zu schaffen, das einen verringerten Platzbedarf aufweist.

Diese Aufgabe wird dadurch gelöst, dass das Verbindungselement den Tragerahmen an der zweiten Gleitfläche über eine Öffnung des Tragerahmens durchsetzt, wobei das Verbindungselement dazu eingerichtet ist, eine Bewegung des Einstellbauteils auf das Halteelement zu übertragen, und wobei das Verbindungselement als Schraubmittel ausgebildet ist, wobei das Einstellbauteil in Verbindung mit dem Schraubmittel in einen gelösten Zustand und in einen befestigten Zustand bringbar ist, wobei das Einstellbauteil im gelösten Zustand durch die erste und die zweite Verstelleinrichtung verschiebbar ist, und das Einstellbauteil im befestigten Zustand durch ein Festziehen des Schraubmittels an den Tragerahmen bewegungsfest klemmbar ist.

Durch die Abkehr von einem klassischen Aufbau mit Verstellarmen und Lagerpunkten, die ein Verstelldreieck ausbilden, und stattdessen den erfindungsgemäßen Ersatz von entlang einer Kugelfläche verschiebbaren Halteelements kann das Bauvolumen eines Einstellsystems deutlich reduziert werden.

Als relevante Bauteile werden insbesondere Blenden, Lichtquellen, insbesondere LED und/oder Laserlichtquellen, Reflektoren, Linsen und/oder ganze Lichtmodule bzw. Baugruppen, oder Sensoren bzw. Lichtsensoren (Photodetektoren), etc. angesehen. Es können daher einzelne oder eine Mehrzahl dieser genannten Komponenten das relevante Bauteil ausbilden, welches mit Hilfe des Einstellsystems verstellbar ist.

Das Verstellen des relevanten Bauteils mittels der ersten Verstelleinrichtung erfolgt unabhängig von einem Verstellen mittels der zweiten Verstelleinrichtung, d.h. die Verstelleinrichtungen funktionieren unabhängig voneinander. Beide Verstelleinrichtungen sollen einander vorzugsweise nicht beeinflussen.

Zum Verschieben des Einstellbauteils - also im gelösten Zustand - wird das Schraubmittel gelöst, aber nur soweit, dass das Halteelement und das Einstellbauteil weiterhin miteinander verbunden sind, sich aber das Einstellbauteil verschieben lässt.

Wird nun die Klemmung - also der befestigte Zustand - so weit gelöst, dass das Haltelement und das Einstellbauteil miteinander noch (gelockert) verbunden sind, so kann das Einstellbauteil durch die erste und die zweite Verstelleinrichtung verschoben werden.

Es kann vorgesehen sein, dass die Lagereinrichtung ein erstes und ein zweites Lagerungsmittel umfasst, welche miteinander in mechanischem Eingriff stehen und eingerichtet sind, das Halteelement an dem Tragerahmen drehbar um die erste und die zweite Achse zu lagern, wobei das erste Lagerungsmittel an dem Halteelement und das zweite Lagerungsmittel an dem Tragerahmen angeordnet ist.

Es kann vorgesehen sein, dass das erste Lagerungsmittel als Vorsprünge und das zweite Lagerungsmittel als zu den jeweiligen Vorsprüngen korrespondierende Ausnehmungen, vorzugsweise längliche Ausnehmungen, ausgebildet sind, wobei die Vorsprünge in den jeweiligen Ausnehmungen gelagert sind.

Es kann vorgesehen sein, dass jeweils zwei Vorsprünge des Haltelements entlang der ersten Achse auf sich gegenüberliegenden Seiten des Halteelements erstrecken.

Es kann vorgesehen sein, dass die jeweils zwei Vorsprünge, welche auf gegenüberliegende Seiten des Halteelements angeordnet sind, die erste Achse bilden, wobei sich bei einem Verdrehen der Halteelements um die zweite Achse die erste Achse und somit die zwei Vorsprünge um die zweite Achse gleichsam mitbewegt werden, wobei sich die Vorsprünge in den dafür entsprechenden Ausnehmungen gedreht bzw. bewegt werden.

Es kann vorgesehen sein, dass zumindest ein Vorsprung, insbesondere genau ein Vorsprung, vorzugsweise zwei Vorsprünge, des Haltelements entlang der zweiten Achse angeordnet sind.

Es kann vorgesehen sein, dass die erste Verstelleinrichtung ein in Bezug auf den Tragerahmen feststehendes Übertragungselement und ein mit dem Übertragungselement in mechanischen Eingriff stehendes Stellelement umfasst, wobei das Stellelement eingerichtet ist an dem Einstellbauteil mittels eines Kopplungselements anzugreifen, und wobei das Stellelement einen Gewindeabschnitt und das Übertragungselement einen zum Gewindeabschnitt korrespondierenden Gegengewindeabschnitt aufweist, wobei das Stellelement mittels des Gegengewindeabschnittes in dem Übertragungselement dreh- und verschiebbar gelagert ist, wobei das Übertragungselement in Kombination mit dem Stellelement dazu eingerichtet ist, eine Drehbewegung des Stellelements in eine Schiebebewegung entlang einer ersten Verschubachse zu wandeln, wobei eine Schiebebewegung des Stellelements der ersten Verstelleinrichtung entlang der ersten Verschubachse ein Verschwenken des Halteelements um die erste Achse bewirkt.

Es kann vorgesehen sein, dass die zweite Verstelleinrichtung ein in Bezug auf den Tragerahmen feststehendes Übertragungselement und ein mit dem Übertragungselement in mechanischen Eingriff stehendes Stellelement umfasst, wobei das Stellelement eingerichtet ist an dem Einstellbauteil mittels einem Kopplungselement anzugreifen, und wobei das Stellelement einen Gewindeabschnitt und das Übertragungselement einen zum Gewindeabschnitt korrespondierenden Gegengewindeabschnitt aufweist, wobei das Stellelement mittels des Gegengewindeabschnittes in dem Übertragungselement dreh- und verschiebbar gelagert ist, wobei das Übertragungselement in Kombination mit dem Stellelement dazu eingerichtet ist, eine Drehbewegung des Stellelements in eine Schiebebewegung entlang einer zweiten Verschubachse zu wandeln, wobei eine Schiebebewegung des Stellelements der zweiten Verstelleinrichtung entlang der zweiten Verschubachse ein Verschwenken des Halteelements um die zweite Achse bewirkt.

Es kann vorgesehen sein, dass das Kopplungselement je Stellelement in einer Führungseinrichtung des Einstellbauteils gelagert ist, welche Führungseinrichtung eine Führungsnut aufweist und eingerichtet ist, bei einer Verschiebung des Einstellbauteils in einer orthogonal zur entsprechenden Verschubachse des Stellelements stehenden Richtung das Kopplungselement in der Führungsnut entlang dieser Richtung zu führen.

Es kann vorgesehen sein, dass das Stellelement als Schraube ausgebildet ist, wobei das Kopplungselement als Kugelkopf ausgebildet ist, vorzugsweise handelt es sich um eine Kugelkopfschraube.

Es kann vorgesehen sein, dass die Führungsnut einen kreisbogenförmigen Verlauf aufweist, vorzugsweise korrespondierend mit der ersten und der zweiten Gleitfläche.

Dies hat den Vorteil, dass sich die jeweiligen Stellelemente der ersten und der zweiten Verstelleinrichtung bei einer Bewegung des Einstellbauteils nicht in den Führungsnuten verhaken bzw. festklemmen, sodass eine weitere Bewegung des Einstellbauteils möglich ist.

Es kann vorgesehen sein, dass die erste und die zweite Achse orthogonal zueinander angeordnet sind, wobei vorzugsweise sich die erste und die zweite Achse schneiden und einen gemeinsamen Schnittpunkt bilden.

Vorzugsweise weist das relevante Bauteil eine für die jeweilige Benutzung des relevanten Bauteils relevante Seite bzw. Seitenfläche auf.

Es kann weiterhin vorgesehen sein, dass der Schnittpunkt der sich schneidenden ersten und zweiten Achse auf der relevanten Seite bzw. Seitenfläche des relevanten Bauteils angeordnet ist. Vorzugsweise ist das relevante Bauteil hierbei eine Sensoreinrichtung bzw. ein Sensor, wobei der Sensor eine Sensorfläche aufweist, um beispielsweise Photonen zu detektieren. Hierbei liegt der Schnittpunkt der ersten und der zweiten Achse auf der Sensorfläche, vorzugsweise im geometrischen Zentrum dieser Sensorfläche.

Eine Schwenkbewegung - um die erste und/ oder zweite Achse - führt in diesem Fall dazu, dass der Punkt der Sensorfläche, in welchem der Schnittpunkt angeordnet ist, lediglich die Orientierung, nicht aber die Position verändert.

Es kann vorgesehen sein, dass die erste und die zweite Verschubachse orthogonal zueinander angeordnet sind.

Die Aufgabe wird ebenso gelöst mit einer Beleuchtungsvorrichtung für einen Kraftfahrzeugscheinwerfer, umfassend zumindest eine Einstellvorrichtung sowie ein relevantes Bauteil.

Die Aufgabe wird ebenso gelöst mit einer Sensorvorrichtung für einen Kraftfahrzeugscheinwerfer, umfassend zumindest eine Einstellvorrichtung sowie ein als Sensor ausgebildetes relevantes Bauteil.

Die Aufgabe wird ebenso gelöst mit einem Kraftfahrzeugscheinwerfer mit zumindest einer Beleuchtungsvorrichtung und/ oder zumindest einer Sensorvorrichtung.

Nachfolgend wird die Erfindung anhand von beispielhaften Zeichnungen näher erläutert. Hierbei zeigt
Fig. 1 eine Explosionsansicht einer beispielhaften Einstellvorrichtung,
Fig. 2 eine perspektivische Ansicht der beispielhaften Einstellvorrichtung in einem zusammengebauten Zustand von seitlich hinten,
Fig. 3 eine perspektivische Ansicht von vorne unten der Einstellvorrichtung aus Fig. 2, und
Fig. 4 eine perspektivische Ansicht von vorne seitlich der Einstellvorrichtung aus Fig. 2.

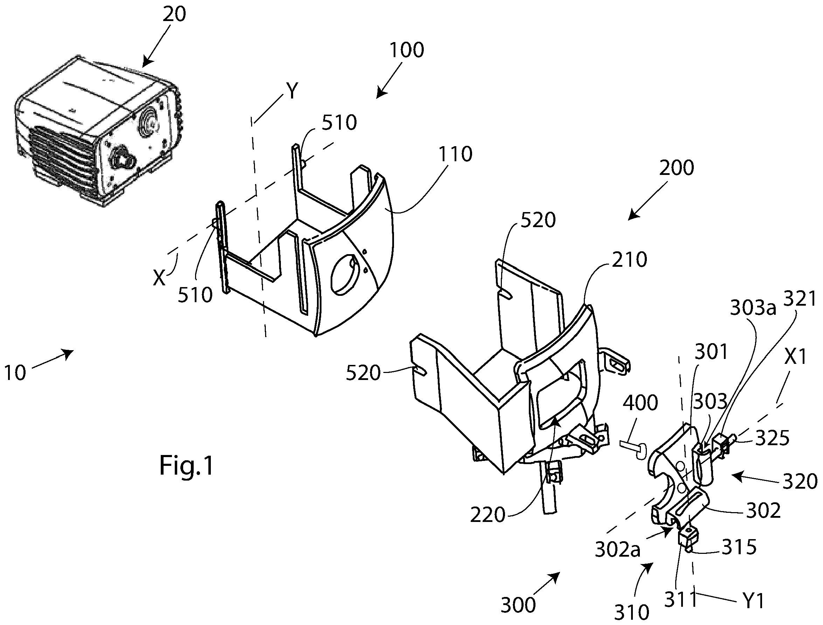

**Fig. 1** zeigt eine beispielhafte Einstellvorrichtung **10** zum Verschwenken eines relevanten Bauteiles **20** für einen Kraftfahrzeugschweinwerfer um eine erste und eine zweite Achse **X, Y** in einer Explosionsansicht.

Die Einstellvorrichtung **10** umfasst ein Halteelement **100** zur verschiebbaren Halterung des zumindest einen relevanten Bauteils **20,** welches in dem gezeigten Beispiel als Sensor ausgebildet ist, wobei das Halteelement **100** eine erste Gleitfläche **110** eines Flächenpaares umfasst, welche als Teil einer Kugelfläche ausgebildet ist. Die erste Gleitfläche **110** ist in **Fig. 1** nur von hinten zu sehen.

Ferner umfasst die Einstellvorrichtung **10** einen Tragerahmen **200** zur Aufnahme des Halteelements **100,** wobei der Tragerahmen **200** ein zweite Gleitfläche **210** des Flächenpaares umfasst, welche als Teil einer Kugelfläche und korrespondierend zur ersten Gleitfläche **110** ausgebildet ist, wobei das Halteelement **100** mittels einer Lagereinrichtung derart in dem Tragerahmen **200** gelagert ist, dass die erste Gleitfläche **110** des Halteelements **100** entlang der zweiten Gleitfläche **210** des Tragerahmens **200** um die erste und die zweite Achse **X, Y** verschiebbar ist.

Die Lagereinrichtung umfasst hierbei ein erstes und ein zweites Lagerungsmittel **510, 520,** welche miteinander in mechanischem Eingriff stehen und eingerichtet sind, das Halteelement **100** an dem Tragerahmen **200** drehbar um die erste und die zweite Achse **X, Y** zu lagern, wobei das erste Lagerungsmittel **510** an dem Halteelement **100** und das zweite Lagerungsmittel **520** an dem Tragerahmen **200** angeordnet ist. In dem gezeigten Beispiel in den Figuren ist das erste Lagerungsmittel als Vorsprünge **510** und das zweite Lagerungsmittel als zu den jeweiligen Vorsprüngen **510** korrespondierende längliche Ausnehmungen **520** ausgebildet, wobei die Vorsprünge **510** in einem zusammengebauten Zustand der Einstellvorrichtung **10** in den jeweiligen Ausnehmungen **520** gelagert sind, siehe hierzu die übrigen Figuren.

Ferner erstrecken sich jeweils zwei Vorsprünge **510** des Haltelements **100** entlang der ersten Achse **X** auf sich gegenüberliegenden Seiten des Halteelements **100** bzw. bilden diese Vorsprünge **510** die erste Achse **X,** wobei sich bei einem Verdrehen bzw. Verschwenken des Halteelements **100** um die zweite Achse **Y** die erste Achse **X** und somit die erwähnten zwei Vorsprünge **510** gleichsam mitbewegt werden. Hierbei verschieben sich die Vorsprünge **510** in den entsprechenden und dafür vorgesehenen Ausnehmungen **520.**

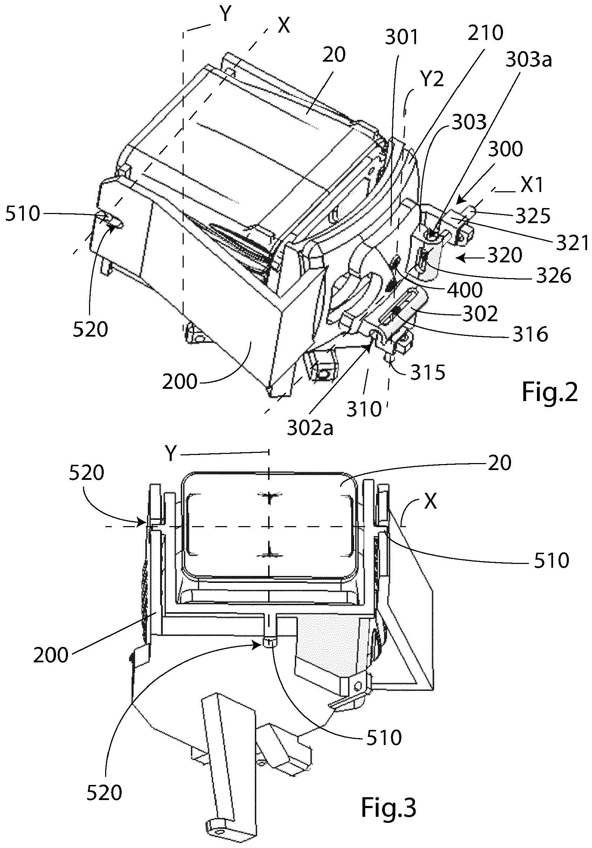

In **Fig. 1** nicht zu sehen, jedoch in **Fig. 3** ist der eine Vorsprung **510,** welcher sich auf der Unterseite des Haltelements **100** befindet und sich entlang der zweiten Achse **Y** erstreckt, wobei sich bei einem Verdrehen bzw. Verschwenken des Halteelements **100** um die erste Achse **X** die zweite Achse **Y** und somit der erwähnte eine Vorsprung **510** gleichsam mitbewegt wird. Hierbei verschiebt sich der Vorsprung **510** in der entsprechenden und dafür vorgesehenen Ausnehmung **520.**

Zum Verschwenken des Sensors **20** bzw. des Halteelements **100** um die erste und die zweite Achse **X, Y** umfasst die Einstellvorrichtung **10** ferner eine Justiereinrichtung **300,** welche Justiereinrichtung **300** ein Einstellbauteil **301** und eine erste Verstelleinrichtung **310** und eine zweite Verstelleinrichtung **320** aufweist, welche erste und zweite Verstelleinrichtung **310, 320** an dem Einstellbauteil **301** angeordnet sind, wobei das Einstellbauteil **301** mit dem Halteelement **100** mechanisch mittels eines Verbindungselements **400** verbunden ist.

Das Verbindungselement **400** durchsetzt den Tragerahmen **200** an der zweiten Gleitfläche **210** über eine Öffnung **220** des Tragerahmens **200,** wobei das Verbindungselement **400** dazu eingerichtet ist, eine Bewegung des Einstellbauteils **301** auf das Halteelement **100** zu übertragen, hierbei ist das Verbindungselement **400** als starrer Körper ausgebildet.

Ferner ist das Verbindungselement **400** als Schraubmittel ausgebildet ist, wobei das Einstellbauteil **301** in Verbindung mit dem Schraubmittel **400** in einen gelösten Zustand und in einen befestigten Zustand bringbar ist. Im gelösten Zustand ist das Einstellbauteil **301** durch die erste und die zweite Verstelleinrichtung **310, 320** verschiebbar. Im befestigten Zustand ist das Einstellbauteil **301** durch ein Festziehen des Schraubmittels **400** an den Tragerahmen **200** bewegungsfest klemmbar, wobei die zweite Gleitfläche **210** des Tragerahmens beim Festziehen des Schraubmittels **400** von dem Halteelement **100** bzw. von der ersten Gleitfläche **110** von der einen Seite und von dem Einstellbauteil **301** von der gegenüberliegenden Seite eingeklemmt wird.

**Fig. 2** zeigt einen zusammengebauten Zustand der Einstellvorrichtung **10** in einer perspektivischen Ansicht von hinten seitlich, wobei die Justiervorrichtung **300** und die erste und zweite Verstelleinrichtung **310, 320** besser zu sehen ist.

Die erste Verstelleinrichtung **310** umfasst ein in Bezug auf den Tragerahmen **200** feststehendes Übertragungselement **311** und ein mit dem Übertragungselement **311** in mechanischen Eingriff stehendes Stellelement **315.** Das Stellelement **315** ist eingerichtet, an dem Einstellbauteil **301** mittels eines Kopplungselements **316** anzugreifen, wobei das Stellelement **315** einen Gewindeabschnitt und das Übertragungselement **311** einen zum Gewindeabschnitt korrespondierenden Gegengewindeabschnitt aufweist. Das Stellelement **315** ist dabei mittels des Gegengewindeabschnittes in dem Übertragungselement **311** dreh- und verschiebbar gelagert, wobei das Übertragungselement **311** in Kombination mit dem Stellelement **315** dazu eingerichtet ist, eine Drehbewegung des Stellelements **315** in eine Schiebebewegung entlang einer ersten Verschubachse **Y1** zu wandeln, wobei eine Schiebebewegung des Stellelements **315** der ersten Verstelleinrichtung **310** entlang der ersten Verschubachse **Y1** ein Verschwenken des Halteelements **100** um die erste Achse X bewirkt.

Die zweite Verstelleinrichtung **320** umfasst ein in Bezug auf den Tragerahmen **200** feststehendes Übertragungselement **321** und ein mit dem Übertragungselement **321** in mechanischen Eingriff stehendes Stellelement **325.** Das Stellelement **325** ist eingerichtet, an dem Einstellbauteil **301** mittels einem Kopplungselement **326** anzugreifen, wobei das Stellelement **325** einen Gewindeabschnitt und das Übertragungselement **321** einen zum Gewindeabschnitt **326** korrespondierenden Gegengewindeabschnitt aufweist. Das Stellelement **325** ist dabei mittels des Gegengewindeabschnittes in dem Übertragungselement **321** dreh- und verschiebbar gelagert, wobei das Übertragungselement **321** in Kombination mit dem Stellelement **325** dazu eingerichtet ist, eine Drehbewegung des Stellelements **325** in eine Schiebebewegung entlang einer zweiten Verschubachse **X1** zu wandeln, wobei eine Schiebebewegung des Stellelements **325** der zweiten Verstelleinrichtung **320** entlang der zweiten Verschubachse **X1** ein Verschwenken des Halteelements **100** um die zweite Achse **Y** bewirkt.

Bei der ersten und der zweiten Verstelleinrichtung **310, 320** ist das Kopplungselement **316, 326** je Stellelement **315, 325** in einer Führungseinrichtung **302, 303** des Einstellbauteils **301** gelagert. Die Führungseinrichtung **302, 303** je Stellelement **315, 325** weist hierbei eine Führungsnut **302a, 303a** auf, welche einen kreisbogenförmigen Verlauf aufweist und eingerichtet ist, bei einer Verschiebung des Einstellbauteils **301** in einer orthogonal zur entsprechenden Verschubachse **X1, Y1** des Stellelements **315, 325** stehenden Richtung das Kopplungselement **316, 326** in der Führungsnut **302a, 303a** entlang dieser Richtung zu führen. Die erste und die zweite Verschubachse **Y1, X1** sind dabei orthogonal zueinander angeordnet.

In dem in den Figuren gezeigten Beispiel sind die Stellelemente **315, 325** als Schraube ausgebildet, wobei das jeweilige Kopplungselement **316, 326** als Kugelkopf ausgebildet ist, vorzugsweise handelt es sich um eine Kugelkopfschraube.

**Fig. 3** zeigt die Einstellvorrichtung **10** in einem zusammengebauten Zustand in einer perspektivischen Vorderansicht, wobei zu erkennen ist, dass die erste und die zweite Achse **X, Y** orthogonal zueinander angeordnet sind, wobei sich die erste und die zweite Achse **X, Y** schneiden und einen gemeinsamen Schnittpunkt bilden.

Der Schnittpunkt der sich schneidenden ersten und zweiten Achse **X, Y** ist dabei auf einer Sensorfläche des Sensors **20** angeordnet. Die Sensorfläche ist beispielsweise jene Fläche, welche Photonen detektieren kann. Im gezeigten Beispiel in **Fig. 3** liegt der Schnittpunkt im geometrischen Zentrum dieser Sensorfläche.

Eine Schwenkbewegung - um die erste und/ oder zweite Achse - führt in diesem Fall dazu, dass der Punkt der Sensorfläche, in welchem der Schnittpunkt angeordnet ist, lediglich die Orientierung, nicht aber die Position verändert.

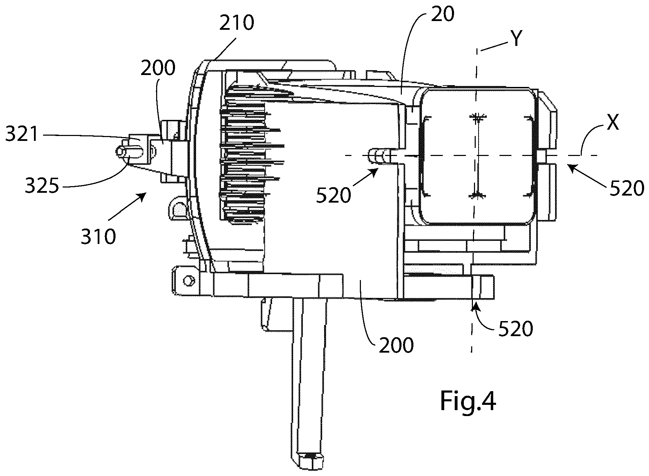

**Fig. 4** zeigt eine perspektivisch seitliche Ansicht der zusammengebauten Einstellvorrichtung **10.**

Es sei angemerkt, dass Begriffe wie "oben", "unten", "seitlich" und "hinten" in Bezug auf eine ordnungsgemäß eingebaute Einstellvorrichtung in einem Kraftfahrzeugscheinwerfer zu verstehen sind.

## Patentansprüche

1. Einstellvorrichtung (10) zum Verschwenken zumindest eines relevanten Bauteiles (20) für einen Kraftfahrzeugschweinwerfer um eine erste und eine zweite Achse (X, Y), umfassend
- ein Halteelement (100) zur verschiebbaren Halterung des zumindest einen relevanten Bauteils (20), welches Halteelement (100) eine erste Gleitfläche (110) eines Flächenpaares umfasst, welche als Teil einer Kugelfläche ausgebildet ist,
- einen Tragerahmen (200) zur Aufnahme des Halteelements (100), wobei der Tragerahmen (200) ein zweite Gleitfläche (210) des Flächenpaares umfasst, welche als Teil einer Kugelfläche und korrespondierend zur ersten Gleitfläche (110) ausgebildet ist, wobei das Halteelement (100) mittels einer Lagereinrichtung derart in dem Tragerahmen (200) gelagert ist, dass die erste Gleitfläche (110) des Halteelements (100) entlang der zweiten Gleitfläche (210) des Tragerahmens (200) um die erste und die zweite Achse (X, Y) verschiebbar ist,
- eine Justiereinrichtung (300) zum Verschwenken des relevanten Bauteils (20) um die erste und die zweite Achse (X, Y), welche Justiereinrichtung (300) ein Einstellbauteil (301) und eine erste Verstelleinrichtung (310) und eine zweite Verstelleinrichtung (320) aufweist, welche erste und zweite Verstelleinrichtung (310, 320) an dem Einstellbauteil (301) angeordnet sind, wobei das Einstellbauteil (301) mit dem Halteelement (100) mechanisch mittels eines Verbindungselements (400) verbunden ist,
**dadurch gekennzeichnet, dass**
das Verbindungselement (400) den Tragerahmen (200) an der zweiten Gleitfläche (210) über eine Öffnung (220) des Tragerahmens (200) durchsetzt, wobei das Verbindungselement (400) dazu eingerichtet ist, eine Bewegung des Einstellbauteils (301) auf das Halteelement (100) zu übertragen, und wobei das Verbindungselement als Schraubmittel ausgebildet ist, wobei das Einstellbauteil in Verbindung mit dem Schraubmittel in einen gelösten Zustand und in einen befestigten Zustand bringbar ist, wobei das Einstellbauteil (301) im gelösten Zustand durch die erste und die zweite Verstelleinrichtung (310, 320) verschiebbar ist, und das Einstellbauteil (301) im befestigten Zustand durch ein Festziehen des Schraubmittels an den Tragerahmen (200) bewegungsfest klemmbar ist.

2. Einstellvorrichtung nach Anspruch 1, **dadurch gekennzeichnet, dass** die Lagereinrichtung ein erstes und ein zweites Lagerungsmittel (510, 520) umfasst, welche miteinander in mechanischem Eingriff stehen und eingerichtet sind, das Halteelement (100) an dem Tragerahmen (200) drehbar um die erste und die zweite Achse (X, Y) zu lagern, wobei das erste Lagerungsmittel (510) an dem Halteelement (100) und das zweite Lagerungsmittel (520) an dem Tragerahmen (200) angeordnet ist.

3. Einstellvorrichtung nach Anspruch 2, **dadurch gekennzeichnet, dass** das erste Lagerungsmittel als Vorsprünge (510) und das zweite Lagerungsmittel als zu den jeweiligen Vorsprüngen (510) korrespondierende Ausnehmungen (520), vorzugsweise längliche Ausnehmungen, ausgebildet sind, wobei die Vorsprünge (510) in den jeweiligen Ausnehmungen (520) gelagert sind.

4. Einstellvorrichtung nach einem der Ansprüche 1 bis 3, **dadurch gekennzeichnet, dass** die erste Verstelleinrichtung (310) ein in Bezug auf den Tragerahmen (200) feststehendes Übertragungselement (311) und ein mit dem Übertragungselement (311) in mechanischen Eingriff stehendes Stellelement (315) umfasst, wobei das Stellelement (315) eingerichtet ist an dem Einstellbauteil (301) mittels eines Kopplungselements (316) anzugreifen, und wobei das Stellelement (315) einen Gewindeabschnitt und das Übertragungselement (311) einen zum Gewindeabschnitt korrespondierenden Gegengewindeabschnitt aufweist, wobei das Stellelement (315) mittels des Gegengewindeabschnittes in dem Übertragungselement (311) dreh- und verschiebbar gelagert ist, wobei das Übertragungselement (311) in Kombination mit dem Stellelement (315) dazu eingerichtet ist, eine Drehbewegung des Stellelements (315) in eine Schiebebewegung entlang einer ersten Verschubachse (Y1) zu wandeln, wobei eine Schiebebewegung des Stellelements (315) der ersten Verstelleinrichtung (310) entlang der ersten Verschubachse (Y1) ein Verschwenken des Halteelements (100) um die erste Achse (X) bewirkt.

5. Einstellvorrichtung nach einem der Ansprüche 1 bis 4, **dadurch gekennzeichnet, dass** die zweite Verstelleinrichtung (320) ein in Bezug auf den Tragerahmen (200) feststehendes Übertragungselement (321) und ein mit dem Übertragungselement (321) in mechanischen Eingriff stehendes Stellelement (325) umfasst, wobei das Stellelement (325) eingerichtet ist an dem Einstellbauteil (301) mittels einem Kopplungselement (326) anzugreifen, und wobei das Stellelement (325) einen Gewindeabschnitt und das Übertragungselement (321) einen zum Gewindeabschnitt (326) korrespondierenden Gegengewindeabschnitt aufweist, wobei das Stellelement (325) mittels des Gegengewindeabschnittes in dem Übertragungselement (321) dreh- und verschiebbar gelagert ist, wobei das Übertragungselement (321) in Kombination mit dem Stellelement (325) dazu eingerichtet ist, eine Drehbewegung des Stellelements (325) in eine Schiebebewegung entlang einer zweiten Verschubachse (X1) zu wandeln, wobei eine Schiebebewegung des Stellelements (325) der zweiten Verstelleinrichtung (320) entlang der zweiten Verschubachse (X1) ein Verschwenken des Halteelements (100) um die zweite Achse (Y) bewirkt.

6. Einstellvorrichtung nach Anspruch 5, **dadurch gekennzeichnet, dass** das Kopplungselement (316, 326) je Stellelement (315, 325) in einer Führungseinrichtung (302, 303) des Einstellbauteils (301) gelagert ist, welche Führungseinrichtung (302, 303) eine Führungsnut (302a, 303a) aufweist und eingerichtet ist, bei einer Verschiebung des Einstellbauteils (301) in einer orthogonal zur entsprechenden Verschubachse (X1, Y1) des Stellelements (315, 325) stehenden Richtung das Kopplungselement (316, 326) in der Führungsnut (302a, 303a) entlang dieser Richtung zu führen.

7. Einstellvorrichtung nach einem der Ansprüche 4 bis 6, **dadurch gekennzeichnet, dass** das Stellelement (315, 325) als Schraube ausgebildet ist, wobei das Kopplungselement (316, 326) als Kugelkopf ausgebildet ist.

8. Einstellvorrichtung nach Anspruch 6 oder 7, **dadurch gekennzeichnet, dass** die Führungsnut (302a, 303a) einen kreisbogenförmigen Verlauf aufweist.

9. Einstellvorrichtung nach einem der Ansprüche 1 bis 8, **dadurch gekennzeichnet, dass** die erste und die zweite Achse (X, Y) orthogonal zueinander angeordnet sind.

10. Einstellvorrichtung nach einem der Ansprüche 5 bis 9, **dadurch gekennzeichnet, dass** die erste und die zweite Verschubachse (Y1, X1) orthogonal zueinander angeordnet sind.

11. Beleuchtungsvorrichtung für einen Kraftfahrzeugscheinwerfer, umfassend zumindest eine Einstellvorrichtung nach einem der vorhergehenden Ansprüche sowie ein relevantes Bauteil.

12. Sensorvorrichtung für einen Kraftfahrzeugscheinwerfer, umfassend zumindest eine Einstellvorrichtung nach einem der Ansprüche 1 bis 10, sowie ein als Sensor ausgebildetes relevantes Bauteil.

13. Kraftfahrzeugscheinwerfer mit zumindest einer Beleuchtungsvorrichtung gemäß Anspruch 11 und/oder zumindest einer Sensorvorrichtung gemäß Anspruch 12.

## Claims

1. Adjusting device (10) for pivoting at least one relevant component (20) for a motor vehicle headlight about a first and a second axis (X, Y), comprising
- a holding element (100) for displaceably holding the at least one relevant component (20), which holding element (100) comprises a first sliding surface (110) of a pair of surfaces which is formed as part of a spherical surface
- a support frame (200) for receiving the holding element (100), the support frame (200) comprising a second sliding surface (210) of the surface pair, which is formed as part of a spherical surface and corresponding to the first sliding surface (110), wherein the holding element (100) is supported in the supporting frame (200) by means of a bearing device in such a way that the first sliding surface (110) of the holding element (100) is displaceable along the second sliding surface (210) of the supporting frame (200) about the first and the second axis (X, Y),
- an adjusting device (300) for pivoting the relevant member (20) about the first and second axes (X, Y), the adjusting device (300) comprising an adjusting member (301) and a first adjusting means (310) and a second adjusting means (320), the first and second adjusting means (310, 320) being arranged on the adjusting member (301), wherein the adjusting member (301) is mechanically connected to the holding member (100) by means of a connecting member (400)
**characterized in that**
the connecting element (400) passes through the support frame (200) at the second sliding surface (210) via an opening (220) in the support frame (200), the connecting element (400) being set up to transmit a movement of the adjusting component (301) to the retaining element (100), and the connecting element being in the form of screw means wherein the adjustment component can be brought into a released state and into a fastened state in conjunction with the screw means, wherein the adjustment component (301) can be displaced in the released state by the first and the second adjusting device (310, 320), and the adjustment component (301) can be clamped to the supporting frame (200) in the fastened state in a movement-proof manner by tightening the screw means.

2. Adjusting device according to claim 1, **characterized in that** the bearing device comprises a first and a second bearing means (510, 520) which are in mechanical engagement with each other and are arranged to rotatably support the holding member (100) on the supporting frame (200) about the first and the second axis (X, Y), wherein the first bearing means (510) is arranged on the holding member (100) and the second bearing means (520) is arranged on the supporting frame (200).

3. Adjusting device according to claim 2, **characterized in that** the first bearing means are formed as projections (510) and the second bearing means are formed as recesses (520), preferably elongated recesses, corresponding to the respective projections (510), wherein the projections (510) are mounted in the respective recesses (520).

4. Adjusting device according to any one of claims 1 to 3, **characterized in that** the first adjusting device (310) comprises a transmission member (311) fixed with respect to the supporting frame (200) and an adjusting member (315) in mechanical engagement with the transmission member (311), wherein the adjusting element (315) is adapted to engage the adjusting component (301) by means of a coupling element (316), and wherein the adjusting element (315) has a threaded portion and the transmission element (311) has a counter-threaded portion corresponding to the threaded portion, wherein the adjusting element (315) is rotatably and displaceably mounted in the transmission element (311) by means of the mating threaded portion, wherein the transmission element (311) in combination with the adjusting element (315) is set up to convert a rotational movement of the adjusting element (315) into a sliding movement along a first displacement axis (Y1), wherein a sliding movement of the adjusting element (315) of the first adjusting device (310) along the first displacement axis (Y1) causes the holding element (100) to pivot about the first axis (X).

5. Adjusting device according to any one of claims 1 to 4, **characterized in that** the second adjusting device (320) comprises a transmission element (321) fixed with respect to the supporting frame (200) and an adjusting element (325) in mechanical engagement with the transmission element (321), wherein the adjusting element (325) is adapted to engage the adjusting component (301) by means of a coupling element (326), and wherein the adjusting element (325) has a threaded portion and the transmission element (321) has a counter-threaded portion corresponding to the threaded portion (326), wherein the adjusting element (325) is rotatably and displaceably mounted in the transmission element (321) by means of the mating threaded portion, wherein the transmission element (321) in combination with the adjusting element (325) is adapted to convert a rotary movement of the adjusting element (325) into a sliding movement along a second displacement axis (X1), wherein a sliding movement of the adjusting element (325) of the second adjusting device (320) along the second displacement axis (X1) causes a pivoting of the holding element (100) about the second axis (Y).

6. Adjusting device according to claim 5, **characterized in that** the coupling element (316, 326) per adjusting element (315, 325) is supported in a guide device (302, 303) of the adjusting component (301), which guide device (302, 303) has a guide groove (302a, 303a) and is arranged to guide the coupling element (316, 326) in the guide groove (302a, 303a) along this direction when the adjusting component (301) is displaced in a direction orthogonal to the corresponding displacement axis (X1, Y1) of the adjusting element (315, 325).

7. Adjusting device according to one of claims 4 to 6, **characterized in that** the adjusting element (315, 325) is designed as a screw, the coupling element (316, 326) being designed as a ball head.

8. Adjusting device according to claim 6 or 7, **characterized in that** the guide groove (302a, 303a) has a circular arc-shaped course.

9. Adjusting device according to one of claims 1 to 8, **characterized in that** the first and second axes (X, Y) are arranged orthogonally to one another.

10. Adjusting device according to one of claims 5 to 9, **characterized in that** the first and second displacement axes (Y1, X1) are arranged orthogonally to one another.

11. Lighting device for a motor vehicle headlamp, comprising at least one adjusting device according to one of the preceding claims, and a relevant component.

12. Sensor device for a motor vehicle headlamp, comprising at least one adjusting device according to any one of claims 1 to 10, and a relevant component designed as a sensor.

13. Motor vehicle headlamp comprising at least one lighting device according to claim 11 and/or at least one sensor device according to claim 12.

## Revendications

1. Dispositif de réglage (10) pour faire pivoter au moins un composant pertinent (20) pour un projecteur de véhicule automobile autour d'un premier et d'un deuxième axe (X, Y), comprenant
- un élément de retenue (100) pour la fixation coulissante de l'au moins un composant (20) concerné, lequel élément de retenue (100) comprend une première surface de glissement (110) d'une paire de surfaces, qui est conçue comme une partie d'une surface sphérique,
- un cadre de support (200) destiné à recevoir l'élément de retenue (100), le cadre de support (200) comprenant une deuxième surface de glissement (210) de la paire de surfaces, qui est réalisée en tant que partie d'une surface sphérique et en correspondance avec la première surface de glissement (110), l'élément de retenue (100) étant logé dans le cadre de support (200) au moyen d'un dispositif de palier de telle sorte que la première surface de glissement (110) de l'élément de retenue (100) puisse être déplacée le long de la deuxième surface de glissement (210) du cadre de support (200) autour du premier et du deuxième axe (X, Y),
- un dispositif d'ajustement (300) pour faire pivoter le composant pertinent (20) autour du premier et du deuxième axe (X, Y), lequel dispositif d'ajustement (300) comprend un composant d'ajustement (301) et un premier dispositif de réglage (310) et un deuxième dispositif de réglage (320), lesquels premier et deuxième dispositifs de réglage (310, 320) sont disposés sur le composant d'ajustement (301), le composant d'ajustement (301) étant relié mécaniquement à l'élément de retenue (100) au moyen d'un élément de liaison (400),
**caractérisé en ce que**
l'élément de liaison (400) traverse le cadre de support (200) au niveau de la deuxième surface de glissement (210) par l'intermédiaire d'une ouverture (220) du cadre de support (200), l'élément de liaison (400) étant conçu pour transmettre un mouvement du composant de réglage (301) à l'élément de retenue (100), et l'élément de liaison étant conçu comme un moyen de vissage, l'élément de réglage pouvant être amené en liaison avec le moyen de vissage dans un état desserré et dans un état fixé, l'élément de réglage (301) pouvant être déplacé dans l'état desserré par le premier et le deuxième dispositif de réglage (310, 320), et l'élément de réglage (301) pouvant être serré dans l'état fixé par un serrage du moyen de vissage sur le cadre de support (200) de manière à résister aux mouvements.

2. Dispositif de réglage selon la revendication 1, **caractérisé en ce que** le dispositif de palier comprend un premier et un deuxième moyen de palier (510, 520) qui sont en prise mécanique l'un avec l'autre et qui sont adaptés pour supporter l'élément de retenue (100) sur le cadre de support (200) de manière rotative autour du premier et du deuxième axe (X, Y), le premier moyen de palier (510) étant disposé sur l'élément de retenue (100) et le deuxième moyen de palier (520) étant disposé sur le cadre de support (200).

3. Dispositif de réglage selon la revendication 2, **caractérisé en ce que** le premier moyen de support est réalisé sous forme de saillies (510) et le deuxième moyen de support est réalisé sous forme d'évidements (520) correspondant aux saillies respectives (510), de préférence des évidements allongés, les saillies (510) étant supportées dans les évidements respectifs (520).

4. Dispositif de réglage selon l'une des revendications 1 à 3, **caractérisé en ce que** le premier dispositif de réglage (310) comprend un élément de transmission (311) fixe par rapport au cadre support (200) et un élément de réglage (315) en prise mécanique avec l'élément de transmission (311), l'élément de réglage (315) étant conçu pour s'engager sur le composant de réglage (301) au moyen d'un élément de couplage (316), et l'élément de réglage (315) présentant une section filetée et l'élément de transmission (311) présentant une section contre-filet correspondant à la section filetée, l'élément de réglage (315) étant monté à rotation et à coulissement dans l'élément de transmission (311) au moyen de la partie contre-filetée, l'élément de transmission (311) étant agencé, en combinaison avec l'élément de réglage (315), pour convertir un mouvement de rotation de l'élément de réglage (315) en un mouvement de coulissement le long d'un premier axe de coulissement (Y1), un mouvement de coulissement de l'élément de réglage (315) du premier dispositif de réglage (310) le long du premier axe de coulissement (Y1) provoquant un pivotement de l'élément de retenue (100) autour du premier axe (X).

5. Dispositif de réglage selon l'une des revendications 1 à 4, **caractérisé en ce que** le deuxième dispositif de réglage (320) comprend un élément de transmission (321) fixe par rapport au cadre support (200) et un élément de réglage (325) en prise mécanique avec l'élément de transmission (321), l'élément de réglage (325) étant conçu pour s'engager sur le composant de réglage (301) au moyen d'un élément de couplage (326), et l'élément de réglage (325) présentant une section filetée et l'élément de transmission (321) une section contre-filetée correspondant à la section filetée (326), l'élément de réglage (325) étant monté à rotation et à coulissement dans l'élément de transmission (321) au moyen de la section contre-filetée, l'élément de transmission (321) étant conçu, en combinaison avec l'élément de réglage (325), pour convertir un mouvement de rotation de l'élément de réglage (325) en un mouvement de coulissement le long d'un deuxième axe de coulissement (X1), un mouvement de coulissement de l'élément de réglage (325) du deuxième dispositif de réglage (320) le long du deuxième axe de coulissement (X1) provoquant un pivotement de l'élément de retenue (100) autour du deuxième axe (Y).

6. Dispositif de réglage selon la revendication 5, **caractérisé en ce que** l'élément de couplage (316, 326) est logé par élément de réglage (315, 325) dans un dispositif de guidage (302, 303) de l'élément de réglage (301), lequel dispositif de guidage (302, 303) présente une rainure de guidage (302a, 303a) et est agencé pour, lors d'un déplacement du composant de réglage (301) dans une direction orthogonale à l'axe de déplacement correspondant (X1, Y1) de l'élément de réglage (315, 325), guider l'élément de couplage (316, 326) dans la rainure de guidage (302a, 303a) le long de cette direction.

7. Dispositif de réglage selon l'une des revendications 4 à 6, **caractérisé en ce que** l'élément de réglage (315, 325) est réalisé sous forme de vis, l'élément de couplage (316, 326) étant réalisé sous forme de tête sphérique.

8. Dispositif de réglage selon la revendication 6 ou 7, **caractérisé en ce que** la rainure de guidage (302a, 303a) présente un tracé en arc de cercle.

9. Dispositif de réglage selon l'une des revendications 1 à 8, **caractérisé en ce que** le premier et le deuxième axe (X, Y) sont orthogonaux entre eux.

10. Dispositif de réglage selon l'une des revendications 5 à 9, **caractérisé en ce que** le premier et le deuxième axe de déplacement (Y1, X1) sont orthogonaux entre eux.

11. Dispositif d'éclairage pour projecteur de véhicule automobile, comprenant au moins un dispositif de réglage selon l'une quelconque des revendications précédentes, ainsi qu'un composant pertinent.

12. Dispositif de détection pour un projecteur de véhicule automobile, comprenant au moins un dispositif de réglage selon l'une des revendications 1 à 10, ainsi qu'un composant pertinent configuré en capteur.

13. Projecteur de véhicule automobile comprenant au moins un dispositif d'éclairage selon la revendication 11 et/ou au moins un dispositif de détection selon la revendication 12.
